# EUROPEAN PATENT SPECIFICATION

(11) **EP 3 289 694 B1**
(45) Date of publication and mention of the grant of the patent: **10.04.2019**
(21) Application number: 15720940.4
(22) Date of filing: 28.04.2015
(51) Int. Cl.: H04B 7/0408, H04W 52/42

(54) **A DEVICE AND A METHOD FOR CONTROLLING A GRID OF BEAMS**
VORRICHTUNG UND VERFAHREN ZUR STEUERUNG EINES RASTERS VON STRAHLEN
DISPOSITIF ET PROCÉDÉ DE COMMANDE D'UNE GRILLE DE FAISCEAUX

(43) Date of publication of application: 07.03.2018
(73) Proprietor: Telefonaktiebolaget LM Ericsson (publ), 164 83 Stockholm (SE)
(72) Inventor: NILSSON, Andreas, SE-413 13 Goteborg (SE); ATHLEY, Fredrik, SE-429 30 Kullavik (SE); PETERSSON, Sven, SE-433 69 Sävedalen (SE)
(74) Representative: Ericsson
(86) International application number: PCT/EP2015/059205
(87) International publication number: WO 2016/173627

(56) References cited:
- EP-A1- 0 639 035
- WO-A1-2013/133743
- US-A1- 2007 099 578
- US-A1- 2014 161 018
- "3rd Generation Partnership Project; Technical Specification Group Radio Access Network; Evolved Universal Terrestrial Radio Access (E-UTRA); Physical layer procedures (Release 11)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.4.0, 20 September 2013 (2013-09-20), pages 1-182, XP050712718, [retrieved on 2013-09-20]

## Description

### TECHNICAL FIELD

The present disclosure relates to a wireless communication network node comprising at least one antenna arrangement, each antenna arrangement being arranged to communicate with user terminals by means of at least two antenna beams constituting a grid of beams.

### BACKGROUND

It is desired to acquire a high degree of capacity in wireless communication networks. One technique to increase capacity in a wireless communication network is to deploy so-called massive beamforming, which is a central component in the next generation of mobile communications, 5G. One envisioned solution is that each wireless communication network node has a large number of narrow fixed beams that a user terminal can be connected to, so called grid-of-beams beamforming. One potential difference compared to current systems is that the traditional cell concept is relaxed so that user terminals connect to and perform handover between such beams instead of cells.

Traditional cell-based networks usually require cell-planning in order to minimize interference between cells. This is normally achieved by transmitting cell-defining reference signals, such as CRS (Cell-specific Reference Signals) in LTE (Long-Term Evolution), through beam patterns that are shaped to provide sufficient coverage while maintaining low inter-cell interference, e.g. a down-tilted conventional sector antenna.

For a beam-based system according to the above, using grid-of-beams beamforming, there is a risk that these interference control measures are lost if the beam selection is based only on received signal power.

EP 0639035 A1 discusses a communication system comprising a number of fixed beams that a user terminal can be connected to. The disclosed antenna systems provide operator flexibility in that coverage areas can be adjusted to avoid overlapping coverage areas between base stations.

WO 2013/133743 A1 discusses using beamforming of reference signals, and generating beamformed downlink communication based on signal quality assessment of the reference signals.

### SUMMARY

It is an object of the present disclosure to provide a beam-based system according to the above with reduced interference. The invention is defined by the independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

Said object is obtained by means of a wireless communication network node according to claim 1 comprising at least one antenna arrangement. Each antenna arrangement is arranged to communicate with user terminals by means of at least two antenna beams constituting a grid of beams. Each user terminal is arranged to communicate via at least one respective antenna beam that is selected in dependence of received power from said antenna beams. The wireless communication network node comprises a control unit that is arranged to control a power pattern of at least two controlled antenna beams in dependence of estimated signal power and interference created by each of said controlled antenna beams. Each power pattern is defined as a product of the corresponding antenna beam's radiation pattern and transmitted power.

Said object is also obtained by means of a method in a wireless communication network node according to claim 6, where the method comprises: Communicating with user terminals by means of at least two antenna beams constituting a grid of beams.

Communicating with each user terminal via at least one respective antenna beam that is selected in dependence of received power from said antenna beams. Controlling a power pattern of at least two controlled antenna beams in dependence of estimated signal power and interference created by each of said controlled antenna beams, where each power pattern is defined as a product of the corresponding antenna beam's radiation pattern and transmitted power.

The control unit is arranged to control the power pattern of each antenna beam such that a desired envelope of the power patterns of all antenna beams is obtained.

The control unit is arranged to first determine a desired shape of said envelope, and from that desired shape derive the corresponding output power of the respective antenna beam.

The control unit is arranged to determine a desired shape of said envelope by defining a set of candidate envelope shapes for a given node, tune the output power of the respective antenna beam in accordance with the candidate envelope shapes, evaluate performance for each one of the candidate envelope shapes and then choose the candidate envelope shape that best fulfills certain predetermined criteria.

According to another example, the power patterns are controlled in dependence of results from interference and traffic load analysis, visual observations of the network deployment, and/or continuous non-disruptive network measurements.

According to another example, each user terminal is arranged to communicate via one antenna beam that is selected in dependence of received beam reference signal power of beam-specific reference signals (BRS:s) transmitted via the antenna beams.

More examples are disclosed in the dependent claims.

A number of advantages are obtained by means of the present disclosure. Mainly, interference and traffic load imbalance of a grid-of-beams antenna arrangement is handled in more reliable and efficient manner.

### BRIEF DESCRIPTION OF THE DRAWINGS

The present disclosure will now be described more in detail with reference to the appended drawings, where:
- Figure 1: shows a schematic side view of a wireless communication network node for a first power pattern configuration;
- Figure 2: shows a schematic side view of a wireless communication network node for a second power pattern configuration;
- Figure 3: shows a schematic front view of an antenna arrangement and beamforming arrangement;
- Figure 4: shows a flow chart of a method according to the present disclosure;
- Figure 5: shows a flow chart for details in a method step;
- Figure 6: illustrates a wireless communication network node arrangement according to some aspects of the present disclosure; and
- Figure 7: illustrates optional components of an optional determining module.

### DETAILED DESCRIPTION

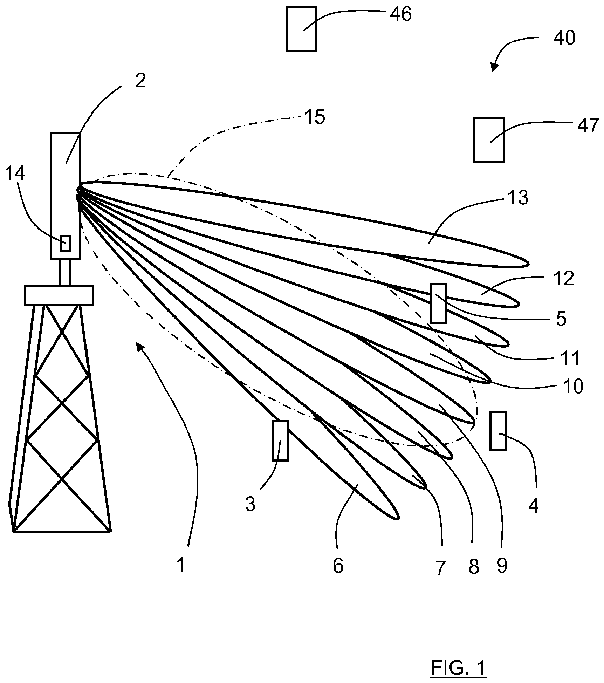

With reference to Figure 1, a schematic side view of a wireless communication network node 1 in a wireless communication network 40 is shown. The node 1 comprises an antenna arrangement 2 that is arranged to communicate with a first user terminal 3, a second user terminal 4 and a third user terminal 5. This communication is achieved via a first antenna beam 6, a second antenna beam 7, a third antenna beam 8, a fourth antenna beam 9, a fifth antenna beam 10, a sixth antenna beam 11, a seventh antenna beam 12 and an eighth antenna beam 13, the antenna beams 6, 7, 8, 9, 10, 11, 12, 13 constituting a grid of beams.

In this example, the first user terminal 3 is arranged to communicate via the first antenna beam 6, the second user terminal 4 is arranged to communicate via the fourth antenna beam 9 and the third user terminal 5 is arranged to communicate via the seventh antenna beam 12, where the corresponding antenna beams 6, 9, 12 have been selected in dependence of detected received power at the user terminals 2, 3, 5 from all antenna beams 6, 7, 8, 9, 10, 11, 12, 13. As apparent, the third user terminal 5 will experience interference from the sixth antenna beam 11, which is undesired.

According to the present disclosure, the node 1 comprises a control unit 14 that is arranged to control a power pattern of all antenna beams 6, 7, 8, 9, 10, 11, 12, 13 in dependence of estimated signal power and interference created by each of the antenna beams 6, 7, 8, 9, 10, 11, 12, 13. Here, each power pattern is defined as a product of the corresponding antenna beam's radiation pattern and transmitted power, and the power pattern of each antenna beam 6, 7, 8, 9, 10, 11, 12, 13 is controlled such that a desired envelope of the power patterns of all antenna beams 6, 7, 8, 9, 10, 11, 12, 15 is obtained. The estimated signal power and interference created by each of the antenna beams 6, 7, 8, 9, 10, 11, 12, 13 may be estimated in a plurality of ways as will be described later.

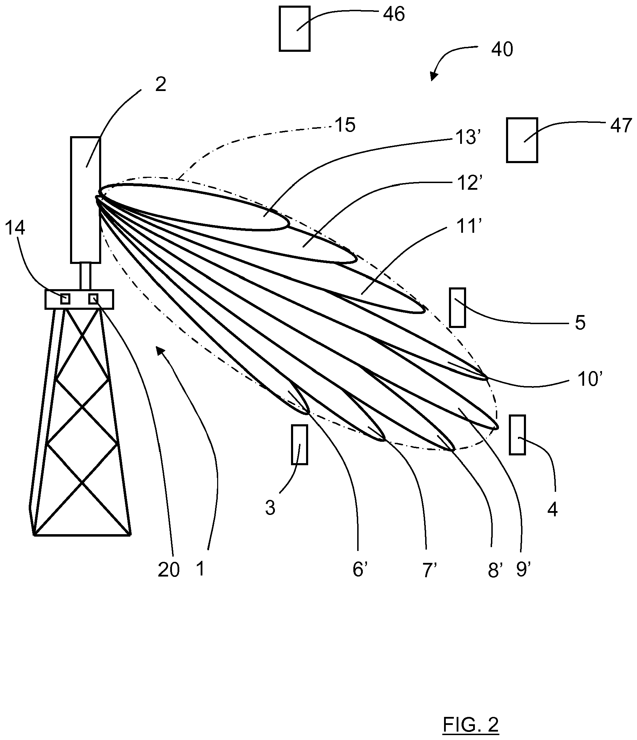

As shown in Figure 2, the power patterns of all antenna beams 6', 7', 8', 9', 10', 11', 12', 13' have been controlled such that a desired envelope 15 is obtained, and in this way interference is reduced. The control is here in the form of reduction of transmitted power for the power patterns. Suitably, the control unit 14 is arranged to first determine a desired shape of the envelope 15, and from that desired shape derive the corresponding output power of the respective antenna beam 6, 7, 8, 9, 10, 11, 12, 13; 6', 7', 8', 9', 10', 11', 12', 13'. By finding a desired shape of the envelope 15, the output power of respective beam 6, 7, 8, 9, 10, 11, 12, 13; 6', 7', 8', 9', 10', 11', 12', 13' could easily be derived. In this way, the number of degrees of freedom when tuning the output power for the beams 6, 7, 8, 9, 10, 11, 12, 13; 6', 7', 8', 9', 10', 11', 12', 13' is reduced, which might otherwise be too large if the output power of respective beam is tuned individually.

In order to determine a desired shape of said envelope 15, the control unit 14 may for example be arranged to define a set of candidate envelope shapes for the node 1, tune the output power of the respective antenna beam, evaluate performance for each one of the candidate envelope shapes and then choose the candidate envelope shape that best fulfills certain predetermined criteria such as traffic distribution, user throughput and interference environment. The evaluation may for example be made in dependence of results from interference and traffic load analysis, visual observations of the network deployment, and/or continuous non-disruptive network measurements. This evaluation constitutes an example of estimation of signal power and interference created by each of the antenna beams 6, 7, 8, 9, 10, 11, 12, 13.

One way to try out these candidate shapes is to transmit CSI-RS signals over beams shaped in the same way as the candidate envelope shapes. The user terminals 3, 4, 5 can then do RSRP (Reference Signal Received Power) measurements on the CSI-RS:s (Channel State Information Reference Signals) of respective envelope candidate shapes and report the measurements to the control unit 14. Based on these measurements, constituting an example of estimation of signal power and interference created by each of the antenna beams 6, 7, 8, 9, 10, 11, 12, 13, the control unit 14 can determine a preferred shape of the envelope 15.

Another way to estimate signal power and interference created by each of the antenna beams 6, 7, 8, 9, 10, 11, 12, 13 is to use cell-planning tools and determine desired beamwidths and pointing directions of the radiation pattern of the envelope 15. The next step is to set the output power of each beam so that the desired envelope shape is obtained.

The envelope 15 may be updated on a rather slow time-scale, for example when a new node has been deployed in the system, or when the traffic distribution changes between night-time traffic and day-time traffic. Alternatively, the envelope 15 may be updated based on continuous, non-disruptive measurements in the network for example RSRP measurements at the user terminals 3, 4, 5 on BRS:s (beam-specific reference signals) or CSI-RS.

Each user terminal 3, 4, 5 may be arranged to communicate via one antenna beam 6, 7, 8, 9, 10, 11, 12, 13; 6', 7', 8', 9', 10', 11', 12', 13' that is selected in dependence of received beam reference signal power of BRS:s.

The control unit 14 may be arranged to apply different output power for BRS:s and data signals at each antenna beam 6, 7, 8, 9, 10, 11, 12, 13; 6', 7', 8', 9', 10', 11', 12', 13'. In this way it is possible to perform load balancing between different beams and different nodes where there are more nodes 46, 47 in the network 40, as well as indirectly controlling the interference situation in the network 40. By tuning the output power of the data signals, it is possible to directly impact the interference generation created by that beam. In some cases, it may be desired to have a small output power on a BRS to decrease the traffic load for that beam while at the same time have a large output power of the data signals in order to get good SNR (Signal to Noise Ratio) and high user throughput. In other situations, it may be desired to have a large output power on a BRS to offload traffic from other nodes 46, 47 while at the same time have a low output power on the data signals in order to reduce the generation of inter-beam interference.

For example, the relation between output power of the BRS:s and data signals can depend on the traffic load in the system so that higher data output power can be used during low-traffic hours, e.g. during night-time, when interference is not a problem.

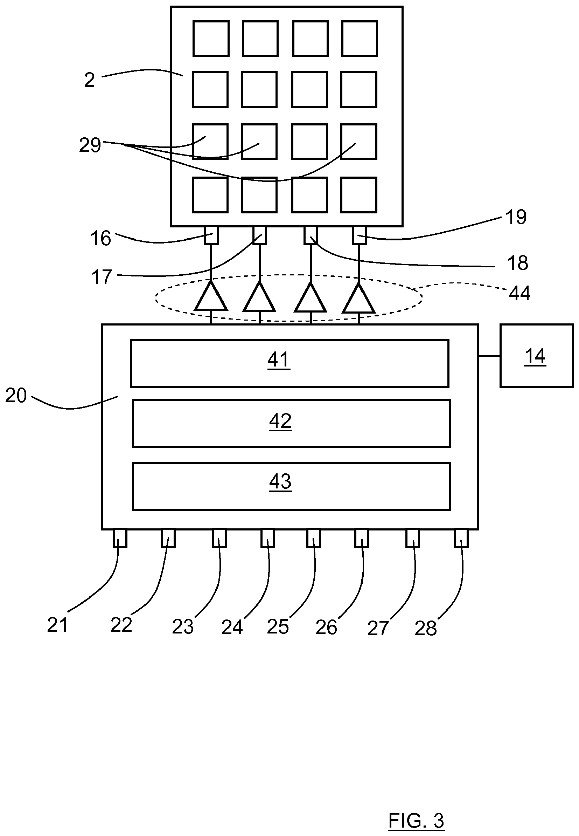

With reference to Figure 3, the antenna arrangement comprises a plurality of antenna elements 29 and four antenna ports 16, 17, 18, 19 that in turn are connected to a beamforming arrangement 20. The beamforming arrangement 20 comprises eight beam ports 21, 22, 23, 24, 25, 26, 27, 28; one beam port for each antenna beam 6, 7, 8, 9, 10, 11, 12, 13. In this example, the beamforming arrangement 20 comprises a mixer device 41, an A/D (Analogue to Digital) converter device 42 and a digital beamformer device 43. The mixer device 41 shifts the frequency of RF (Radio Frequency) signals , the A/D device converts analogue base band signals to digital base band signals, and the digital beamformer device 43 applies beamforming to the digital base band signals.

Alternatively, the beamforming arrangement 20 may be based on analogue technology.

As shown in Figure 3, power amplifiers 44 may be connected to each antenna port 16, 17, 18, 19 such that the power resources can be divided between the different beams. If one beam transmits with reduced output power, another beam can transmit with the remaining power resources. Alternately, for the same reason, a power amplifier may be connected to each antenna element or group of antenna elements (not shown).

Alternatively, the antenna beams 6, 7, 8, 9, 10, 11, 12, 13; 6', 7', 8', 9', 10', 11', 12', 13' may be fixed; for example, a Butler matrix or switches may be used (not shown). When a Butler matrix is used, there is typically one power amplifier per antenna beam 6, 7, 8, 9, 10, 11, 12, 13; 6', 7', 8', 9', 10', 11', 12', 13'.

The antenna elements 29 may be dual polarized or comprise antenna elements of orthogonal polarizations. In that case, the polarizations associated with the different ports will be different.

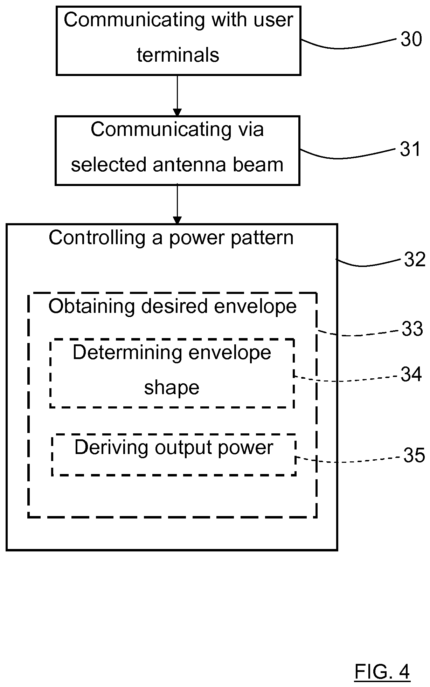

With reference to Figure 4, the present disclosure also relates to a method in a wireless communication network node 1, where the method comprises:
30: Communicating with user terminals 3, 4, 5 by means of at least two antenna beams 6, 7, 8, 9, 10, 11, 12, 13 constituting a grid of beams.
31: Communicating with each user terminal 3, 4, 5 via at least one respective antenna beam 6, 7, 8, 9, 10, 11, 12, 13 that is selected in dependence of received power from said antenna beams 6, 7, 8, 9, 10, 11, 12, 13.
32: Controlling a power pattern of at least two controlled antenna beams 6, 7, 8, 9, 10, 11, 12, 13 in dependence of estimated signal power and interference created by each of said controlled antenna beams 6, 7, 8, 9, 10, 11, 12, 13, where each power pattern is defined as a product of the corresponding antenna beam's radiation pattern and transmitted power.

According to an example, the method comprises:
33: Controlling the power pattern of each antenna beam 6, 7, 8, 9, 10, 11, 12, 13; 6', 7', 8', 9', 10', 11', 12', 13' such that a desired envelope 15 of the power patterns of all antenna beams 6, 7, 8, 9, 10, 11, 12, 13; 6', 7', 8', 9', 10', 11', 12', 13' is obtained.

According to another example, the method comprises:
34: Determining a desired shape of said envelope (15).
35: Deriving the corresponding output power of the respective antenna beam 6, 7, 8, 9, 10, 11, 12, 13; 6', 7', 8', 9', 10', 11', 12', 13' from that desired shape.

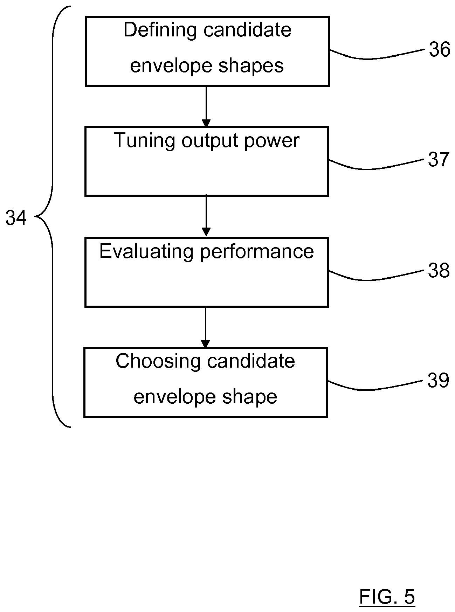

According to another example, with reference also to Figure 5, the step 34 of determining a desired shape of said envelope 15 comprises:
36: Defining a set of candidate envelope shapes for a given node.
37: Tuning the output power of the respective antenna beam in accordance with the candidate envelope shapes.
38: Evaluating performance for each one of the candidate envelope shapes.
39: Choosing the candidate envelope shape 15 that best fulfills certain predetermined criteria.

The present disclosure is not limited to the above, but may vary within the scope of the appended claims. For example, the number of antenna beams may vary, from of at least two antenna beams to several hundreds, or even several thousands, of antenna beams.

Each user terminal 3, 4, 5 does not necessarily have to communicate via only one antenna beam, but via at least one respective antenna beam. The control unit 14 is arranged to control the power pattern of at least two controlled antenna beams; there may thus be antenna beams that are not controlled, even though all antenna beams 6, 7, 8, 9, 10, 11, 12, 13; 6', 7', 8', 9', 10', 11', 12', 13' are controlled in the example above, constituting controlled antenna beams 6, 7, 8, 9, 10, 11, 12, 13; 6', 7', 8', 9', 10', 11', 12', 13'.

A wireless communication network node 1 according to the above may comprise one or more antenna arrangements 2.

When terms like orthogonal and the like are used, these terms are not to be interpreted as mathematically exact, but within what is practically obtainable.

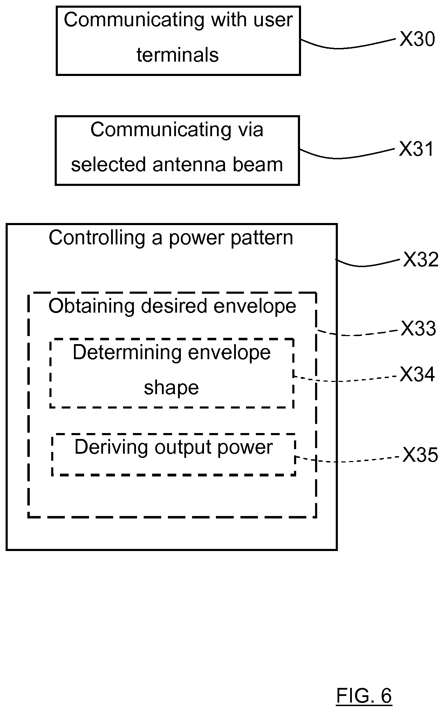

Figure 6 shows a wireless communication network node arrangement that comprises:
- A first communication module X30 configured to communicate with user terminals 3, 4, 5 by means of at least two antenna beams 6, 7, 8, 9, 10, 11, 12, 13 constituting a grid of beams;
- A second communication module X31 configured to communicate with each user terminal via at least one respective antenna beam 6, 7, 8, 9, 10, 11, 12, 13 that is selected in dependence of received power from said antenna beams 6, 7, 8, 9, 10, 11, 12, 13;
- A controlling module X32 configured to control a power pattern of at least two controlled antenna beams 6, 7, 8, 9, 10, 11, 12, 13 in dependence of estimated signal power and interference created by each of said controlled antenna beams 6, 7, 8, 9, 10, 11, 12, 13, where each power pattern is defined as a product of the corresponding antenna beam's radiation pattern and transmitted power.

According to some aspects, the wireless communication network node arrangement further comprises an optional controlling module X33 configured to control the power pattern of each antenna beam 6, 7, 8, 9, 10, 11, 12, 13; 6', 7', 8', 9', 10', 11', 12', 13' such that a desired envelope 15 of the power patterns of all antenna beams 6, 7, 8, 9, 10, 11, 12, 13; 6', 7', 8', 9', 10', 11', 12', 13' is obtained.

According to some aspects, the wireless communication network node arrangement further comprises an optional determining module X34 configured to determine a desired shape of said envelope 15; and an optional deriving module X35, configured to derive the corresponding output power of the respective antenna beam 6, 7, 8, 9, 10, 11, 12, 13; 6', 7', 8', 9', 10', 11', 12', 13' from that desired shape.

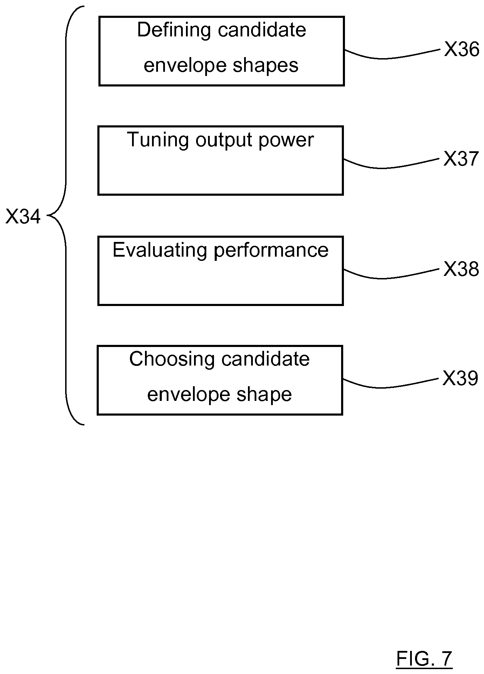

According to some aspects, with reference also to Figure 7, the optional determining module X34 in turn comprises:
- An optional defining module X36 configured to define a set of candidate envelope shapes for a given node;
- An optional tuning module X37 configured to tune the output power of the respective antenna beam in accordance with the candidate envelope shapes;
- An optional evaluating module X38, configured to evaluate performance for each one of the candidate envelope shapes; and
- An optional choosing module X39, configured to evaluate the candidate envelope 15 shape that best fulfills certain predetermined criteria.

Generally, the present disclosure relates to a wireless communication network node 1 comprising at least one antenna arrangement 2, each antenna arrangement 2 being arranged to communicate with user terminals 3, 4, 5 by means of at least two antenna beams 6, 7, 8, 9, 10, 11, 12, 13 constituting a grid of beams, where each user terminal 3, 4, 5 is arranged to communicate via at least one respective antenna beam 6, 7, 8, 9, 10, 11, 12, 13 that is selected in dependence of received power from said antenna beams 6, 7, 8, 9, 10, 11, 12, 13, wherein the wireless communication network node 1 comprises a control unit 14 that is arranged to control a power pattern of at least two controlled antenna beams 6, 7, 8, 9, 10, 11, 12, 13 in dependence of estimated signal power and interference created by each of said controlled antenna beams 6, 7, 8, 9, 10, 11, 12, 13, where each power pattern is defined as a product of the corresponding antenna beam's radiation pattern and transmitted power.

According to an example, the control unit 14 is arranged to control the power pattern of each antenna beam 6, 7, 8, 9, 10, 11, 12, 13 such that a desired envelope 15 of the power patterns of all antenna beams 6, 7, 8, 9, 10, 11, 12, 13 is obtained.

According to an example, the control unit 14 is arranged to first determine a desired shape of said envelope 15, and from that desired shape derive the corresponding output power of the respective antenna beam 6, 7, 8, 9, 10, 11, 12, 13; 6', 7', 8', 9', 10', 11', 12', 13'.

According to an example, the control unit 14 is arranged to determine a desired shape of said envelope 15 by defining a set of candidate envelope shapes for a given node, tune the output power of the respective antenna beam in accordance with the candidate envelope shapes, evaluate performance for each one of the candidate envelope shapes and then choose the candidate envelope shape that best fulfills certain predetermined criteria.

According to an example, the power patterns are controlled in dependence of results from interference and traffic load analysis, visual observations of the network deployment, and/or continuous non-disruptive network measurements.

According to an example, each user terminal 3, 4, 5 is arranged to communicate via one antenna beam 6, 7, 8, 9, 10, 11, 12, 13 that is selected in dependence of received beam reference signal power of beam-specific reference signals, BRS:s, transmitted via the antenna beams 6, 7, 8, 9, 10, 11, 12, 13.

According to an example, the control unit 14 is arranged to apply different output power for BRS and data signals for each antenna beam 6, 7, 8, 9, 10, 11, 12, 13.

According to an example, the antenna beams 6, 7, 8, 9, 10, 11, 12, 13 are fixed.

According to an example, each antenna arrangement 2 comprises a plurality of antenna elements 29 and at least two antenna ports 16, 17, 18, 19 that in turn are connected to a beamforming arrangement 20, where the beamforming arrangement 20 comprises at least two beam ports 21, 22, 23, 24, 25, 26, 27, 28; one beam port for each antenna beam 6, 7, 8, 9, 10, 11, 12, 13.

Generally, the present disclosure also relates to a method in a wireless communication network node 1, where the method comprises:
30: communicating with user terminals 3, 4, 5 by means of at least two antenna beams 6, 7, 8, 9, 10, 11, 12, 13 constituting a grid of beams;
31: communicating with each user terminal via at least one respective antenna beam 6, 7, 8, 9, 10, 11, 12, 13 that is selected in dependence of received power from said antenna beams 6, 7, 8, 9, 10, 11, 12, 13;
32: controlling a power pattern of at least two controlled antenna beams 6, 7, 8, 9, 10, 11, 12, 13 in dependence of estimated signal power and interference created by each of said controlled antenna beams 6, 7, 8, 9, 10, 11, 12, 13, where each power pattern is defined as a product of the corresponding antenna beam's radiation pattern and transmitted power.

According to an example, the method comprises:
33: controlling the power pattern of each antenna beam 6, 7, 8, 9, 10, 11, 12, 13; 6', 7', 8', 9', 10', 11', 12', 13' such that a desired envelope 15 of the power patterns of all antenna beams 6, 7, 8, 9, 10, 11, 12, 13; 6', 7', 8', 9', 10', 11', 12', 13' is obtained.

According to an example, the method comprises:
34: determining a desired shape of said envelope 15; and
35: deriving the corresponding output power of the respective antenna beam 6, 7, 8, 9, 10, 11, 12, 13; 6', 7', 8', 9', 10', 11', 12', 13' from that desired shape.

According to an example, the step 34 of determining a desired shape of said envelope 15 comprises:
36: defining a set of candidate envelope shapes for a given node;
37: tuning the output power of the respective antenna beam in accordance with the candidate envelope shapes;
38: evaluating performance for each one of the candidate envelope shapes; and
39: choosing the candidate envelope 15 shape that best fulfills certain predetermined criteria.

According to an example, the power patterns are controlled in dependence of results from interference and traffic load analysis, visual observations of the network deployment, and/or continuous non-disruptive network measurements.

According to an example, communication between a wireless communication network node 1 and user terminals 3, 4, 5 uses one antenna beam 6, 7, 8, 9, 10, 11, 12, 13 that is selected in dependence of received beam reference signal power of beam-specific reference signals, BRS:s, transmitted via the antenna beams 6, 7, 8, 9, 10, 11, 12, 13.

According to an example, different output power is applied for BRS and data signals for each antenna beam 6, 7, 8, 9, 10, 11, 12, 13.

## Claims

1. A wireless communication network node (1) comprising at least one antenna arrangement (2), each antenna arrangement (2) being arranged to communicate with user terminals (3, 4, 5) by means of at least two fixed antenna beams (6, 7, 8, 9, 10, 11, 12, 13) constituting a grid of beams, where each user terminal (3, 4, 5) is arranged to communicate via at least one respective antenna beam (6, 7, 8, 9, 10, 11, 12, 13) that is selected in dependence of received power from said antenna beams (6, 7, 8, 9, 10, 11, 12, 13), wherein the wireless communication network node (1) comprises a control unit (14) that is arranged to control a power pattern of at least two controlled antenna beams (6, 7, 8, 9, 10, 11, 12, 13) in dependence of estimated signal power and interference created by each of said controlled antenna beams (6, 7, 8, 9, 10, 11, 12, 13), where each power pattern is defined as a product of the corresponding antenna beam's radiation pattern and transmitted power, wherein the control unit (14) is arranged to control the power pattern of each antenna beam (6, 7, 8, 9, 10, 11, 12, 13) such that a desired envelope (15) of the power patterns of all antenna beams (6, 7, 8, 9, 10, 11, 12, 13) is obtained, **characterized in that** the control unit (14) is arranged to determine a desired shape of said envelope (15) by defining a set of candidate envelope shapes for a given node, tune the output power of the respective antenna beam in accordance with the candidate envelope shapes, evaluate performance for each one of the candidate envelope shapes and then choose the candidate envelope shape that best fulfills certain predetermined criteria.

2. A wireless communication network node (1) according to any one of the previous claims, wherein the power patterns are controlled in dependence of results from interference and traffic load analysis, visual observations of the network deployment, and/or continuous non-disruptive network measurements.

3. A wireless communication network node (1) according to any one of the previous claims, wherein each user terminal (3, 4, 5) is arranged to communicate via one antenna beam (6, 7, 8, 9, 10, 11, 12, 13) that is selected in dependence of received beam reference signal power of beam-specific reference signals, BRS:s, transmitted via the antenna beams (6, 7, 8, 9, 10, 11, 12, 13).

4. A wireless communication network node (1) according to claim 3, wherein the control unit (14) is arranged to apply different output power for BRS and data signals for each antenna beam (6, 7, 8, 9, 10, 11, 12, 13).

5. A wireless communication network node (1) according to any one of the previous claims, wherein each antenna arrangement (2) comprises a plurality of antenna elements (29) and at least two antenna ports (16, 17, 18, 19) that in turn are connected to a beamforming arrangement (20), where the beamforming arrangement (20) comprises at least two beam ports (21, 22, 23, 24, 25, 26, 27, 28); one beam port for each antenna beam (6, 7, 8, 9, 10, 11, 12, 13).

6. A method in a wireless communication network node (1), where the method comprises:
(30) communicating with user terminals (3, 4, 5) by means of at least two fixed antenna beams (6, 7, 8, 9, 10, 11, 12, 13) constituting a grid of beams; and
(31) communicating with each user terminal via at least one respective antenna beam (6, 7, 8, 9, 10, 11, 12, 13) that is selected in dependence of received power from said antenna beams (6, 7, 8, 9, 10, 11, 12, 13);
wherein the method further comprises:
(32) controlling a power pattern of at least two controlled antenna beams (6, 7, 8, 9, 10, 11, 12, 13) in dependence of estimated signal power and interference created by each of said controlled antenna beams (6, 7, 8, 9, 10, 11, 12, 13), where each power pattern is defined as a product of the corresponding antenna beam's radiation pattern and transmitted power,
(33) controlling the power pattern of each antenna beam (6, 7, 8, 9, 10, 11, 12, 13; 6', 7', 8', 9', 10', 11', 12', 13') such that a desired envelope (15) of the power patterns of all antenna beams (6, 7, 8, 9, 10, 11, 12, 13; 6', 7', 8', 9', 10', 11', 12', 13') is obtained, wherein the method is **characterized by**
(36) defining a set of candidate envelope shapes for a given node;
(37) tuning the output power of the respective antenna beam in accordance with the candidate envelope shapes;
(38) evaluating performance for each one of the candidate envelope shapes; and
(39) choosing the candidate envelope (15) shape that best fulfills certain predetermined criteria.

7. A method according to claim 6, wherein the power patterns are controlled in dependence of results from interference and traffic load analysis, visual observations of the network deployment, and/or continuous non-disruptive network measurements.

8. A method according to any one of the claims 6 or 7, wherein communication between a wireless communication network node (1) and user terminals (3, 4, 5) uses one antenna beam (6, 7, 8, 9, 10, 11, 12, 13) that is selected in dependence of received beam reference signal power of beam-specific reference signals, BRS:s, transmitted via the antenna beams (6, 7, 8, 9, 10, 11, 12, 13).

9. A method according to any one of the claims 6-8, wherein different output power is applied for BRS and data signals for each antenna beam (6, 7, 8, 9, 10, 11, 12, 13).

## Patentansprüche

1. Knoten (1) eines drahtlosen Kommunikationsnetzwerks, umfassend mindestens eine Antennenanordnung (2), wobei jede Antennenanordnung (2) so ausgelegt ist, dass sie mit Benutzerendgeräten (3, 4, 5) durch mindestens zwei feste Antennenstrahlen (6, 7, 8, 9, 10, 11, 12, 13) kommuniziert, die ein Raster von Strahlen bilden, wobei jedes Benutzerendgerät (3, 4, 5) so ausgelegt ist, dass es über mindestens einen jeweiligen Antennenstrahl (6, 7, 8, 9, 10, 11, 12, 13) kommuniziert, der in Abhängigkeit von Empfangsleistung aus den Antennenstrahlen (6, 7, 8, 9, 10, 11, 12, 13) ausgewählt wird, wobei der Knoten (1) des drahtlosen Kommunikationsnetzwerks eine Steuereinheit (14) umfasst, die so ausgelegt ist, dass sie ein Leistungsmuster mindestens zweier gesteuerter Antennenstrahlen (6, 7, 8, 9, 10, 11, 12, 13) in Abhängigkeit von geschätzter Signalleistung und Störung steuert, die durch jeden der gesteuerten Antennenstrahlen (6, 7, 8, 9, 10, 11, 12, 13) verursacht wird, wobei jedes Leistungsmuster als ein Produkt des Strahlungsmusters und der Sendeleistung des entsprechenden Antennenstrahls definiert wird, wobei die Steuereinheit (14) so ausgelegt ist, dass sie das Leistungsmuster jedes Antennenstrahls (6, 7, 8, 9, 10, 11, 12, 13) derart steuert, dass eine gewünschte Hüllkurve (15) der Leistungsmuster aller Antennenstrahlen (6, 7, 8, 9, 10, 11, 12, 13) erhalten wird, **dadurch gekennzeichnet, dass** die Steuereinheit (14) so ausgelegt ist, dass sie eine gewünschte Form der Hüllkurve (15) durch Definieren eines Satzes von in Frage kommenden Hüllkurvenformen für einen gegebenen Knoten bestimmt, die Ausgangsleistung des jeweiligen Antennenstrahls gemäß den in Frage kommenden Hüllkurvenformen abstimmt, die Performance für jede der in Frage kommenden Hüllkurvenformen beurteilt und anschließend die in Frage kommende Hüllkurvenform wählt, die bestimmte vorgegebene Kriterien am besten erfüllt.

2. Knoten (1) eines drahtlosen Kommunikationsnetzwerks nach einem Anspruch 1, wobei die Leistungsmuster in Abhängigkeit von Ergebnissen aus einer Störungs- und Verkehrslastanalyse, visuellen Beobachtungen der Netzwerkbereitstellung und/oder kontinuierlichen nicht störenden Netzwerkmessungen gesteuert werden.

3. Knoten (1) eines drahtlosen Kommunikationsnetzwerks nach einem der vorhergehenden Ansprüche, wobei jedes Benutzerendgerät (3, 4, 5) so ausgelegt ist, dass es über einen Antennenstrahl (6, 7, 8, 9, 10, 11, 12, 13) kommuniziert, der in Abhängigkeit von Empfangsstrahlreferenzsignalleistung von strahlspezifischen Referenzsignalen, BRS, ausgewählt wird, die über die Antennenstrahlen (6, 7, 8, 9, 10, 11, 12, 13) gesendet werden.

4. Knoten (1) eines drahtlosen Kommunikationsnetzwerks nach Anspruch 3, wobei die Steuereinheit (14) so ausgelegt ist, dass sie eine unterschiedliche Ausgangsleistung für BRS- und Datensignale für jeden Antennenstrahl (6, 7, 8, 9, 10, 11, 12, 13) anwendet.

5. Knoten (1) eines drahtlosen Kommunikationsnetzwerks nach einem der vorhergehenden Ansprüche, wobei die Antennenanordnung (2) eine Mehrzahl von Antennenelementen (29) und mindestens zwei Antennenanschlüsse (16, 17, 18, 19) umfasst, die wiederum mit einer Strahlformungsanordnung (20) verbunden sind, wobei die Strahlformungsanordnung (20) mindestens zwei Strahlanschlüsse (21, 22, 23, 24, 25, 26, 27, 28), einen Strahlanschluss für jeden Antennenstrahl (6, 7, 8, 9, 10, 11, 12, 13), umfasst.

6. Verfahren in einem Knoten (1) eines drahtlosen Kommunikationsnetzwerks, wobei das Verfahren umfasst:
(30) Kommunizieren mit Benutzerendgeräten (3, 4, 5) durch mindestens zwei feste Antennenstrahlen (6, 7, 8, 9, 10, 11, 12, 13), die ein Raster von Strahlen bilden; und
(31) Kommunizieren mit jedem Benutzerendgerät über mindestens einen jeweiligen Antennenstrahl (6, 7, 8, 9, 10, 11, 12, 13), der in Abhängigkeit von Empfangsleistung aus den Antennenstrahlen (6, 7, 8, 9, 10, 11, 12, 13) ausgewählt wird,
wobei das Verfahren ferner umfasst:
(32) Steuern eines Leistungsmusters mindestens zweier gesteuerter Antennenstrahlen (6, 7, 8, 9, 10, 11, 12, 13) in Abhängigkeit von geschätzter Signalleistung und Störung, die durch jeden der gesteuerten Antennenstrahlen (6, 7, 8, 9, 10, 11, 12, 13) verursacht wird, wobei jedes Leistungsmuster als ein Produkt des Strahlungsmusters und der Sendeleistung des entsprechenden Antennenstrahls definiert wird,
(33) derartiges Steuern des Leistungsmusters jedes Antennenstrahls (6, 7, 8, 9, 10, 11, 12, 13; 6', 7', 8', 9', 10', 11', 12', 13'), dass eine gewünschte Hüllkurve (15) der Leistungsmuster aller Antennenstrahlen (6, 7, 8, 9, 10, 11, 12, 13; 6', 7', 8', 9', 10', 11', 12', 13') erhalten wird, wobei das Verfahren **gekennzeichnet ist durch**:
(36) Definieren eines Satzes von in Frage kommenden Hüllkurvenformen für einen gegebenen Knoten;
(37) Abstimmen der Ausgangsleistung des jeweiligen Antennenstrahls gemäß den in Frage kommenden Hüllkurvenformen;
(38) Beurteilen der Performance für jede der in Frage kommenden Hüllkurvenformen; und
(39) Wählen der in Frage kommenden Form der Hüllkurve (15), die bestimmte vorgegebene Kriterien am besten erfüllt.

7. Verfahren nach Anspruch 6, wobei die Leistungsmuster in Abhängigkeit von Ergebnissen aus einer Störungs- und Verkehrslastanalyse, visuellen Beobachtungen der Netzwerkbereitstellung und/oder kontinuierlichen nicht störenden Netzwerkmessungen gesteuert werden.

8. Verfahren nach einem der Ansprüche 6 oder 7, wobei Kommunikation zwischen einem Knoten (1) eines drahtlosen Kommunikationsnetzwerks und Benutzerendgeräten (3, 4, 5) einen Antennenstrahl (6, 7, 8, 9, 10, 11, 12, 13) verwendet, der in Abhängigkeit von Empfangsstrahlreferenzsignalleistung von strahlspezifischen Referenzsignalen, BRS, ausgewählt wird, die über die Antennenstrahlen (6, 7, 8, 9, 10, 11, 12, 13) gesendet werden.

9. Verfahren nach einem der Ansprüche 6 bis 8, wobei eine unterschiedliche Ausgangsleistung für BRS- und Datensignale für jeden Antennenstrahl (6, 7, 8, 9, 10, 11, 12, 13) angewendet wird.

## Revendications

1. Noeud de réseau de communication sans fil (1) comprenant au moins un agencement d'antenne (2), chaque agencement d'antenne (2) étant agencé pour communiquer avec des terminaux d'utilisateur (3, 4, 5) au moyen d'au moins deux faisceaux d'antenne fixes (6, 7, 8, 9, 10, 11, 12, 13) constituant une grille de faisceaux, où chaque terminal d'utilisateur (3, 4, 5) est agencé pour communiquer par l'intermédiaire d'au moins un faisceau d'antenne respectif (6, 7, 8, 9, 10, 11, 12, 13) qui est sélectionné en fonction d'une puissance reçue parmi lesdits faisceaux d'antenne (6, 7, 8, 9, 10, 11, 12, 13), dans lequel le noeud de réseau de communication sans fil (1) comprend une unité de commande (14) qui est agencée pour commander un motif de puissance d'au moins deux faisceaux d'antenne commandés (6, 7, 8, 9, 10, 11, 12, 13) en fonction d'une puissance de signal estimée et d'un brouillage créé par chacun desdits faisceaux d'antenne commandés (6, 7, 8, 9, 10, 11, 12, 13), où chaque motif de puissance est défini en tant qu'un produit du motif de rayonnement du faisceau d'antenne correspondant et d'une puissance émise, dans lequel l'unité de commande (14) est agencée pour commander le motif de puissance de chaque faisceau d'antenne (6, 7, 8, 9, 10, 11, 12, 13) de manière à obtenir une enveloppe souhaitée (15) des motifs de puissance de tous les faisceaux d'antenne (6, 7, 8, 9, 10, 11, 12, 13), **caractérisé en ce que** l'unité de commande (14) est agencée pour déterminer une forme souhaitée de ladite enveloppe (15) par la définition d'un ensemble de formes d'enveloppe candidates pour un noeud donné, régler la puissance de sortie du faisceau d'antenne respectif en fonction des formes d'enveloppe candidates, évaluer une performance pour chacune des formes d'enveloppe candidates, puis choisir la forme d'enveloppe candidate qui remplit au mieux certains critères prédéterminés.

2. Noeud de réseau de communication sans fil (1) selon la revendication 1, dans lequel les motifs de puissance sont commandés en fonction de résultats d'une analyse de brouillage et de charge de trafic, d'observations visuelles du déploiement de réseau, et/ou de mesures de réseau non perturbatrices continues.

3. Noeud de réseau de communication sans fil (1) selon l'une quelconque des revendications précédentes, dans lequel chaque terminal d'utilisateur (3, 4, 5) est agencé pour communiquer par l'intermédiaire d'un faisceau d'antenne (6, 7, 8, 9, 10, 11, 12, 13) qui est sélectionné en fonction d'une puissance de signal de référence de faisceau reçue de signaux de référence spécifiques au faisceau, BRS, transmis par l'intermédiaire des faisceaux d'antenne (6, 7, 8, 9, 10, 11, 12, 13).

4. Noeud de réseau de communication sans fil (1) selon la revendication 3, dans lequel l'unité de commande (14) est agencée pour appliquer différentes puissances de sortie pour des BRS et des signaux de données pour chaque faisceau d'antenne (6, 7, 8, 9, 10, 11, 12, 13).

5. Noeud de réseau de communication sans fil (1) selon l'une quelconque des revendications précédentes, dans lequel chaque agencement d'antenne (2) comprend une pluralité d'éléments d'antenne (29) et au moins deux ports d'antenne (16, 17, 18, 19) qui sont raccordés à tour de rôle à un agencement de formation de faisceau (20), où l'agencement de formation de faisceau (20) comprend au moins deux ports de faisceau (21, 22, 23, 24, 25, 26, 27, 28), à raison d'un port de faisceau pour chaque faisceau d'antenne (6, 7, 8, 9, 10, 11, 12, 13).

6. Procédé dans un noeud de réseau de communication sans fil (1), le procédé comprenant :
(30) la communication avec des terminaux d'utilisateur (3, 4, 5) au moyen d'au moins deux faisceaux d'antenne fixes (6, 7, 8, 9, 10, 11, 12, 13) constituant une grille de faisceaux ; et
(31) la communication avec chaque terminal d'utilisateur par l'intermédiaire d'au moins un faisceau d'antenne respectif (6, 7, 8, 9, 10, 11, 12, 13) qui est sélectionné en fonction d'une puissance reçue parmi lesdits faisceaux d'antenne (6, 7, 8, 9, 10, 11, 12, 13) ;
dans lequel le procédé comprend en outre :
(32) la commande d'un motif de puissance d'au moins deux faisceaux d'antenne commandés (6, 7, 8, 9, 10, 11, 12, 13) en fonction d'une puissance de signal estimée et d'un brouillage créé par chacun desdits faisceaux d'antenne commandés (6, 7, 8, 9, 10, 11, 12, 13), où chaque motif de puissance est défini en tant qu'un produit du motif de rayonnement du faisceau d'antenne correspondant et d'une puissance émise,
(33) la commande du motif de puissance de chaque faisceau d'antenne (6, 7, 8, 9, 10, 11, 12, 13 ; 6', 7', 8', 9', 10', 11', 12', 13') de manière à obtenir une enveloppe souhaitée (15) des motifs de puissance de tous les faisceaux d'antenne (6, 7, 8, 9, 10, 11, 12, 13 ; 6', 7', 8', 9', 10', 11', 12', 13'), dans lequel le procédé est **caractérisé par** :
(36) la définition d'un ensemble de formes d'enveloppe candidates pour un noeud donné ;
(37) le réglage de la puissance de sortie du faisceau d'antenne respectif en fonction des formes d'enveloppe candidates ;
(38) l'évaluation d'une performance pour chacune des formes d'enveloppe candidates ; et
(39) le choix de la forme d'enveloppe candidate (15) qui remplit au mieux certains critères prédéterminés.

7. Procédé selon la revendication 6, dans lequel les motifs de puissance sont commandés en fonction de résultats d'une analyse de brouillage et de charge de trafic, d'observations visuelles du déploiement de réseau, et/ou de mesures de réseau non perturbatrices continues.

8. Procédé selon la revendication 6 ou 7, dans lequel une communication entre un noeud de réseau de communication sans fil (1) et des terminaux d'utilisateur (3, 4, 5) utilise un faisceau d'antenne (6, 7, 8, 9, 10, 11, 12, 13) qui est sélectionné en fonction d'une puissance de signal de référence de faisceau reçue de signaux de référence spécifiques au faisceau, BRS, transmis par l'intermédiaire des faisceaux d'antenne (6, 7, 8, 9, 10, 11, 12, 13).

9. Procédé selon l'une quelconque des revendications 6 à 8, dans lequel différentes puissances de sortie sont appliquées pour des BRS et des signaux de données pour chaque faisceau d'antenne (6, 7, 8, 9, 10, 11, 12, 13).
